# EUROPEAN PATENT APPLICATION

(11) **EP 1 132 762 A2**
(43) Date of publication of application: **12.09.2001**
(21) Application number: 01113335.2
(22) Date of filing: 21.06.1994
(51) Int. Cl.: G02B 23/12

(54) **Monocular night vision device**

(30) Priority: 12.11.1993 US 152193
(62) Divisional of application: 94920321.0
(71) Applicant: ITT MANUFACTURING ENTERPRISES, INC., Wilmington, Delaware 19801 (US)
(72) Inventor: Palmer, Gary L., Vinton, Virginia 24179 (US)
(74) Representative: Esser, Wolfgang

(57) **Abstract**

A night vision device (10) having an objective lens subassembly (12) containing at least one first lens therein, an image intensifier tube (64) for producing an intensified visible image from energy directed to said image intensifier tube through said objective lens subassembly, a collimator subassembly (66) containing at least one second lens therein, said collimator subassembly (66) collimating the intensified image emanating from said image intensifier tube to produce a collimated image, an eyepiece subassembly (14) containing at least one third lens therein for viewing said collimated image and a housing (18) having a first and second opposed interior surfaces, each of said surfaces including a plurality of aligned partitions (25, 27) extending therefrom for engaging and supporting said objective lens subassembly, said image intensifier tube, and said collimator subassembly in a predetermined optical relationship relative to each other, thus facilitating easy assembly.

## Description

### RELATED APPLICATIONS

The assignees related company, ITT Corporation, is the record owner of U.S. Patent 5,495,364 filed by the present inventor on August 18, 1993 and entitled NIGHT VISION BINOCULARS and furthermore US Patents 5,37,261, 5,847,868 and document WO 95/05618.

### TECHNICAL FIELD OF THE INVENTION

The present invention relates to optical devices that enable a viewer to observe objects at night or during other low-light conditions. More particularly, the present invention relates to a handheld monocular system that can be manufactured at low cost for sale to the general public.

### BACKGROUND ART

Night vision devices are widely used in the military to provide soldiers, aviators and sailors with the ability to view objects at night or during other low light conditions. As a result, many night vision devices are currently being manufactured according to exacting military specifications and designs. Similarly, many such night vision devices are being manufactured for specific military applications such as part of the sights of various weapons or as part of goggle assemblies that attach to an aviator's or soldier's helmet. As a consequence, many of the night vision devices currently being manufactured are neither affordable nor easily adapted to non-military uses by the general public.

Night vision devices typically include an image intensifier tube that converts infrared energy into visible light. Such night vision devices typically require sophisticated power supplies and circuitry to control the operation of the image intensifier tube and sophisticated optical arrangements that direct the infrared energy into the image intensifier tube and visible light away from the image intensifier tube. In military applications, the various military personnel are trained in how to use and adjust the night vision devices they are issued. However, a night vision device designed for use by the general public would have to provide simple adjustments that can be readily operated by a variety of different users in a dark environment. Furthermore, a night vision device designed for use by the general public would also require various adjustable optical characteristics that would be easy to operate and adjust. Such a consumer oriented night vision device would have wide ranging application in regard to nighttime marine piloting, nighttime security, surveillance, hunting, fishing, backpacking, navigation, underwater vision, search and rescue and law enforcement.

ITT Corporation, manufactures many night vision devices for various applications. Night vision devices for military applications are exemplified by U.S. Patent No. 5,084,780 to Phillips entitled TELESCOPIC SIGHT FOR DAY/NIGHT VIEWING which doesn't show how the optical components are fixed within the housing and U.S. Patent No. 5,029,963 to Naselli entitled REPLACEMENT DEVICE FOR A DRIVER'S VIEWER.
ITT Corporation also has designed handheld night vision binoculars devices. Such a binocular device is exemplified in U.S. Patent 5,444,568, entitled CONSUMER NIGHT VISION VIEWING APPARATUS and filed on September 30, 1992. In this application, a night vision binocular device is disclosed having simplified adjustment controls, interpupillary adjustments and diopter cell focus adjustments Related optical components that can be utilized in the construction of night vision binocular devices are shown in U.S. Patent Application No. 08/039,755 entitled DIOPTER CELL ASSEMBLY FOR A BINOCULAR VIEWING SYSTEM, and U.S. Patent No. 5,157,553, entitled COLLIMATOR FOR A BINOCULAR VIEWING SYSTEM. These references show a diopter cell design and a collimator lens assembly for night vision binoculars, respectively. The assignee holds many other patents and applications related to image intensifier tubes and related devices which are of interest in regard to the present subject matter.

As has been previously mentioned, an important application for publicly available night vision devices will be for use in hunting, fishing, backpacking and other outdoor activities. These outdoor settings are less than ideal for a sophisticated electro-optical device such as a handheld night vision instrument. To survive in such an environments, the night vision instrument must be capable of withstanding large temperature changes, impacts, and must be designed to withstand damage from rain, high humidity, as well as the possibility of being dropped into the water. To be suitable for use by plant security and law enforcement personnel surveillance activities, such a device must also be lightweight for continuous use and dark colored to prevent detection.

It is therefore the object of the present invention to provide component parts for the above-mentioned night vision device that are easy to manufacture and assembly, thereby further reducing the cost of manufacturing the night vision device.

### DISCLOSURE OF THE INVENTION

The present invention is a monocular night vision assembly as defined in claim 1, capable of converting low intensity light and infrared energy into a visible image and is manufactured in a manner that promotes both ease of use and ease of assembly. The monocular night vision assembly includes an objective lens assembly, image intensifier tube, collimator lens assembly and diopter cell assembly encased in an easy to assemble, partitioned, waterproof housing. The objective lens assembly, image intensifier tube, collimator lens assembly and diopter cell assembly are each placed between in a respective pair of partitions to establish a folded optical path. Thus, a predetermined optical relationship of the various components is achieved without the need for skilled labor or special alignment adjustments. The exterior of the housing is contoured so that the device may be easily grasped and comfortably held by the user while in use.

The primary optical elements of the monocular night vision device are retained between respective partitions within the housing without the need for mechanical fasteners. Moreover, the housing can be assembled to be water tight without the use of a gasket. A surface mounted, on/off button disposed on a circuit board within the housing is used to operate the monocular night vision assembly. A reciprocably mounted objective lens is utilized to permit the user to selectively focus upon any object in the vision field. If magnification is required, the objective lens may be optionally configured as a zoom lens. Accordingly, the monocular night vision device of the present invention can be manufactured and assembled in a highly reliable and cost efficient manner, thereby making the same affordable to the general consuming public.

### BRIEF DESCRIPTION OF THE DRAWINGS

FIG. 1 is a side perspective view of a monocular night vision device constructed in accordance with an illustrative embodiment of the present invention;
FIG. 2 is a side perspective of the embodiment FIG. 1 having a supplemental magnification lens coupled thereto;
FIG. 3 is an exploded view depicting the interior details and two-piece construction of the housing utilized to retain and protect the various electronic and optical components of the illustrative device of FIG. 1;
FIG. 4a is a cross-sectional view of mating sections of the housing of the illustrative embodiment prior to assembly;
FIG. 4b is a cross-sectional view of the mating sections of the housing depicted in FIG. 4a after assembly thereof;
FIG. 5 is a perspective view of the device of FIG. 1 with one of the housing sections removed to show a preferred internal arrangement of electro-optical components therewithin;
FIG. 6 is a full elevation view of the device of FIG. 1 with one of the housing sections removed to show the location of partitions for supporting the electro-optical components in the preferred arrangement depicted in FIG. 5;
FIG. 7 is an exploded view of a diopter cell subassembly contained within the night vision device of FIG. 1;
FIG. 8a is an exploded view depicting the various components of the eyepiece utilized by the night vision device of FIG. 1;
FIG. 8b is a perspective view of the completed eyepiece assembly utilized by the night vision device of FIG. 1;
FIG. 9a is an exploded view of the components of the collimator assembly contained within the night vision device of FIG. 1;
FIG. 9b is a perspective view of the completed collimator assembly contained within the night vision device of the FIG. 1;
FIG. 10 is a cross-sectional view of the image intensifier tube contained within the monocular night vision device of FIG. 1.

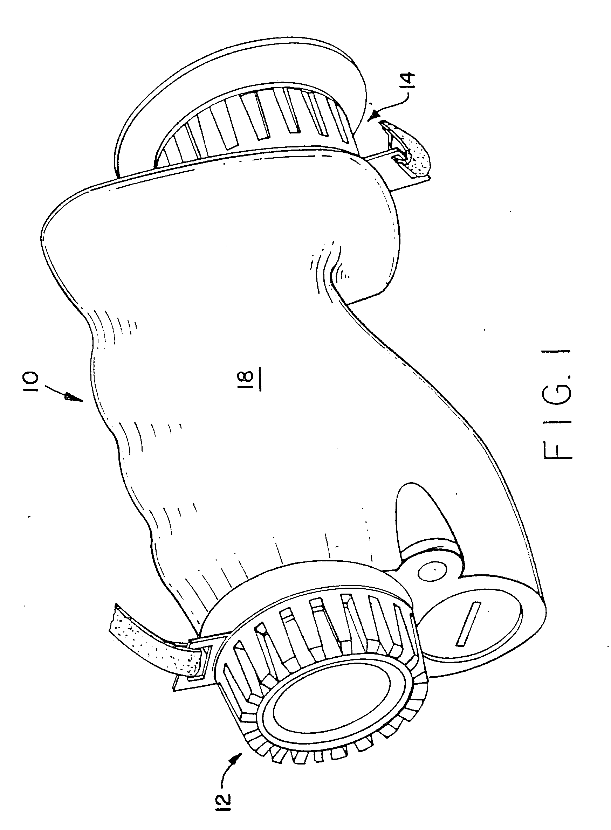

Referring to FIG. 1, there is shown an illustrative embodiment of a monocular night vision device constructed in accordance with the present invention. As will be explained, the night vision device 10 includes an objective lens assembly 12 having a single objective lens for receiving infrared and low intensity light and a single lens eye piece assembly 14 for viewing a visible image created from the received light. As will be later explained, the objective lens assembly 12 is adjustable in accordance with the physical and optical needs of the viewer that is utilizing the monocular night vision device 10.

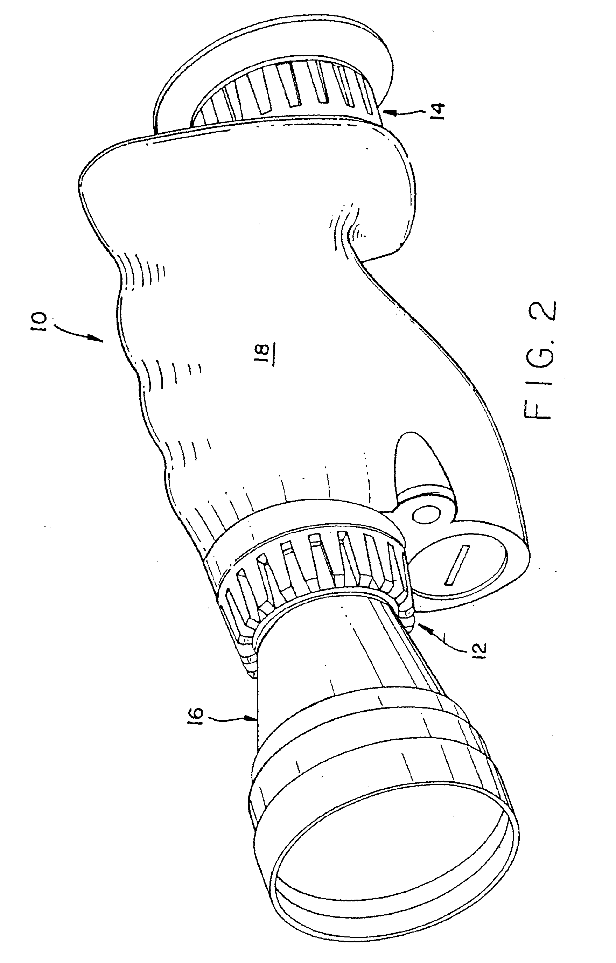

In accordance with an illustrative embodiment of the present invention, night vision device 10 is manufactured with one set power of magnification. As shown in FIG. 2, the night vision device 10 may be further provided with a supplemental magnification lens 16 to increase the power of magnification. For instance, device 10 may come with an initial power of magnification of 3X, however when supplemental magnification lens 16 is added, the power of magnification may be increased to 8X. The magnification lens may be coupled to device 10 in any conventional manner. For example, supplemental magnification lens 16 may be provided with a threaded end (not shown) receivable in a corresponding threaded bore in the objective lens assembly 12. Such interconnections systems are well known for joining telephoto lenses to cameras and any such know interconnection system may be employed. Alternatively, interference fit connections or other such mechanical interconnection systems may also be employed.

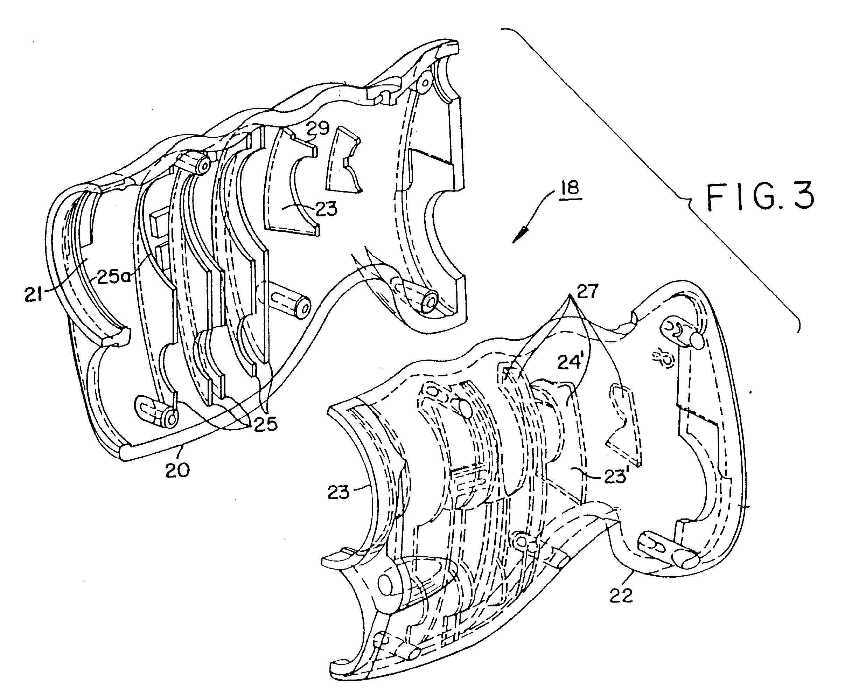

Returning again to FIG. 1, it will be recalled that an important objective of the present invention is to provide a monocular night vision device capable of withstanding large temperature changes, high humidity environments and the possibility of being dropped into the water. Accordingly, the optical and electronic components of the night vision monocular 10 are preferably encased in a waterproof housing 18. As most clearly shown in FIG. 3, housing 18 is preferably of two-piece construction and includes a first half or section 20 and a second half or section 22 that will be joined together by a fluid impermeable seal (not shown) formed about the peripheral edges of sections 20 and 22 when the sections are coupled together. The interior surface of each of sections 20, 22 is provided with a plurality of contoured partitions, 25 and 27, respectively. When sections 20 and 22 are joined together, each respective partition of the first section is aligned with a corresponding partition of the second section, thereby defining pairs of opposing support surfaces for receiving the various electro-optical components and retaining them in a predetermined optical relationship. As will be readily ascertained by those skilled in the art, such an arrangement permits the various components to be assembled quickly, even by unskilled laborers, without the use of mechanical fasteners, specialized tools or measuring devices.

Housing 18 is preferably made of a material that is highly impact resistant, corrosion resistant and light weight. An example of such a material is XENOY® PC/PBT resin alloy, a thermoplastic material supplied by the General Electric Company via the GE Plastics Division. Polyester bond urethanes, such as General Electric's XENOY® 2000 & 5000 Series have also been found to be adequate materials for forming the housing of the present invention. It will, however, be readily appreciated by those skilled in the art that any suitable material possessing the desired properties of light weight and impact and corrosion resistance may be utilized in accordance with the present invention. Because of the possibility that the device may be utilized to conduct hunting, surveillance, or other activities in which the user wishes to conceal his presence, housing 18 is preferably black or some other dark color. It will, of course, be readily ascertained that the housing may be of a lighter color or utilize reflective markings for applications in which easy retrieval is a more important consideration than undetected viewing.

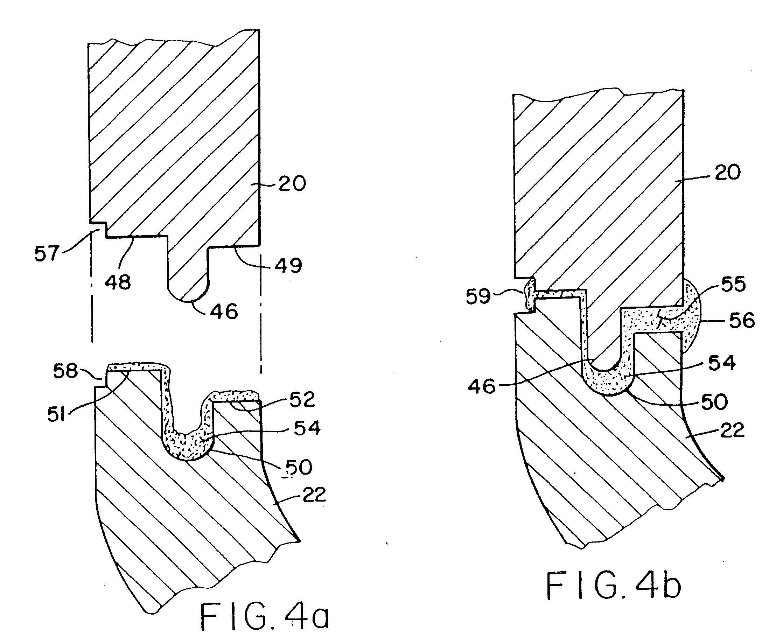

As can be seen from FIG. 3, first section 20 and second section 22 of housing 18 join together along a complex peripheral path which path is defined by the peripheral edge of the corresponding openings of the housing sections 20 and 22. However, it is necessary to join the housing sections 20 and 22 together to create a fluid impermeable seal along the resulting joint (not shown). Such a seal may be accomplished through the use of a suitably shaped gasket placed between housing sections 20 and 22. However, due to the complex shape of the peripheral edges, a gasket that would operate to join and seal the edges would be expensive to manufacture and highly labor intensive to install. Thus, in accordance with the present invention, the use of a gasket is avoided by utilizing an inner seal formation between the housing sections as shown in FIGS. 4a and 4b.

With reference to FIG. 4a, it will be seen that the peripheral edge of housing section 20 is formed with a depending peripheral projection 46 while the corresponding edge of housing section 22 is provided with a correspondingly shaped peripheral groove 50. As will be readily ascertained, both the projection 46 and groove 50 are specially shaped to receive a suitable adhesive enabling an inner peripheral housing seal to be formed to thus provide a waterproof seal between the first and second housing sections without the need for a gasket. Thus, in FIG. 4a, there is shown a section of first half 20 of housing 18 just prior to its being inserted into the corresponding groove of the second half 22 of the housing 18. As can be seen, the bottom surfaces 48, 49 on either side of projection 46 lay in two different planes, with the bottom surface 48 proximate the exterior of the housing being higher than the bottom surface 49 proximate the interior of the housing. The top surfaces 51, 52 on either side of the groove 50 also lay in two different planes with the top surface 51 proximate the exterior of the housing being higher than the top surface 52 proximate the interior of the housing. For a purpose which will later be explained, groove 50 is dimensioned to be significantly wider and deeper than projection 46.

Prior to joining of the first and second housing sections, an adhesive 54 is applied within the groove 50 of the lower section 22. The adhesive 54 selected must bond to the thermoplastic material of the housing 18 and cure to become water impermeable. A suitable and preferable adhesive contains methyl acrylate as a component which can be applied and employed similar to an epoxy using an activator which is mixed with the adhesive material. Such materials are available from ITW adhesive systems, of 30 Endicatt Street, Danvers, Massachusetts 01923. There are other adhesives which will operate as well. The adhesive has to be relatively viscous and hence not pour but act as an epoxy as being thick so it can be extruded to form the seal.

Referring now to FIG. 4b, it will be observed that when projection 46 of housing section 20 is received within groove 50 of housing section 22, a larger gap 55 is created proximate the interior of the housing than is created proximate the exterior of housing. As a result, the adhesive 54 presents between section 20 and 22 is directed toward the inside of the housing structure. Excess adhesive that is extruded from the joint creates a bead 56 on the inside of the housing. The bead 56, created by the surface tension of the adhesive 54, covers the entire joint along the inside of the housing 18. Notches 57, 58 are disposed on housing sections 20 and 22, respectively at points proximate the exterior of the housing 18. As sections 20 and 22 are joined, a semi-rectangular relief 59 is formed on the exterior of the housing 16 that runs along the joint between the housing sections. Excess adhesive 54 that is extruded from the joint fills the back of the semi-rectangular relief 59 thereby providing a clean assembly without a highly visible line of adhesive. The presence of the adhesive 54 between sections 20 and 22, in the semi-rectangular relief 59 and along the bead 56 inside the housing 18, creates a barrier that hermetically seals the interior of the housing 16. Once the adhesive 54 cures, a fluid impermeable seal is created between the sections 20 and 22 of the housing 18 without the use of a gasket. As a result, the housing sections can be joined in an efficient and economical manner.

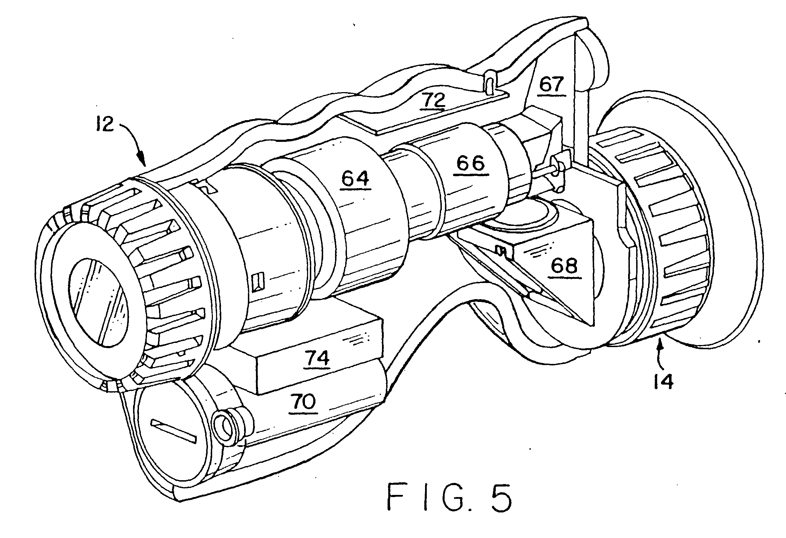

With reference now to FIG. 5, a preferred arrangement of electro-optical components within the interior of housing 18 will be observed. The electro-optical subassembly includes objective lens assembly 12, an image intensifier tube 64 for converting the infrared energy from the objective lens 12 into a visible image, a collimator lens assembly 66 for collimating the visible image, reflecting means in the form of a prism 67 for reflecting the collimated image, diopter cell assembly 68 which receives the reflected image and reflects the same, and eyepiece assembly 14 which receives the reflected image and allows the user to view the same. Also included within housing 18 is a battery housing assembly 70 which is dimensioned and arranged to receive the one or more batteries which will supply power to circuit board 72 via power supply module 74.

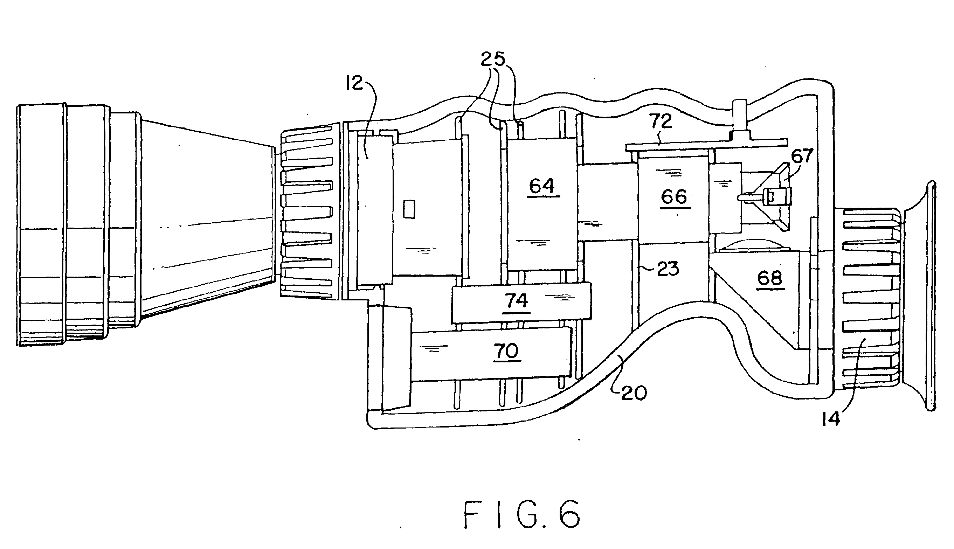

With reference now to both FIGS. 3 and 6, it will be seen that the location and contour of partitions 25 are selected to supporting the electro-optical components in a predetermined optical arrangement. For example, the partitions which support objective assembly 12 each have a semicircular recess dimensioned and arranged to define a support surface 25a for receiving and supporting sections of the objective lens assembly within the housing interior. To provide support for circuit board 72, partition 23 is notched to provide supporting surface 29. Section 22 has a similar notched partition 23' which defines a second supporting surface 29'. It will be readily ascertained by those skilled in the art that when the sections 20 and 22 are joined, circuit board 72 may be positioned as shown in FIG. 6 with a power control pushbutton 73 thereof extending through the housing.

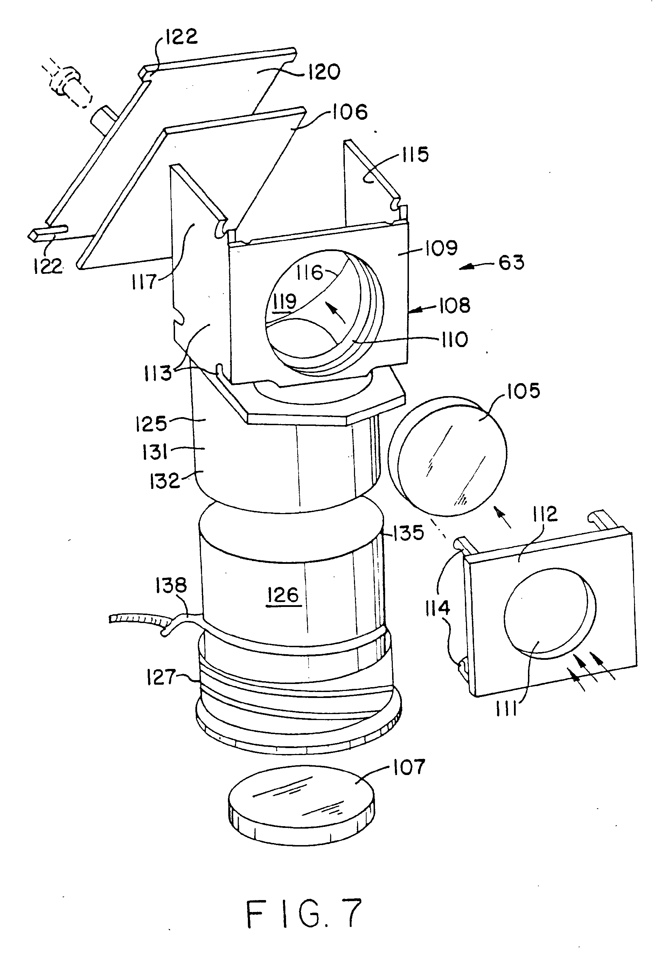

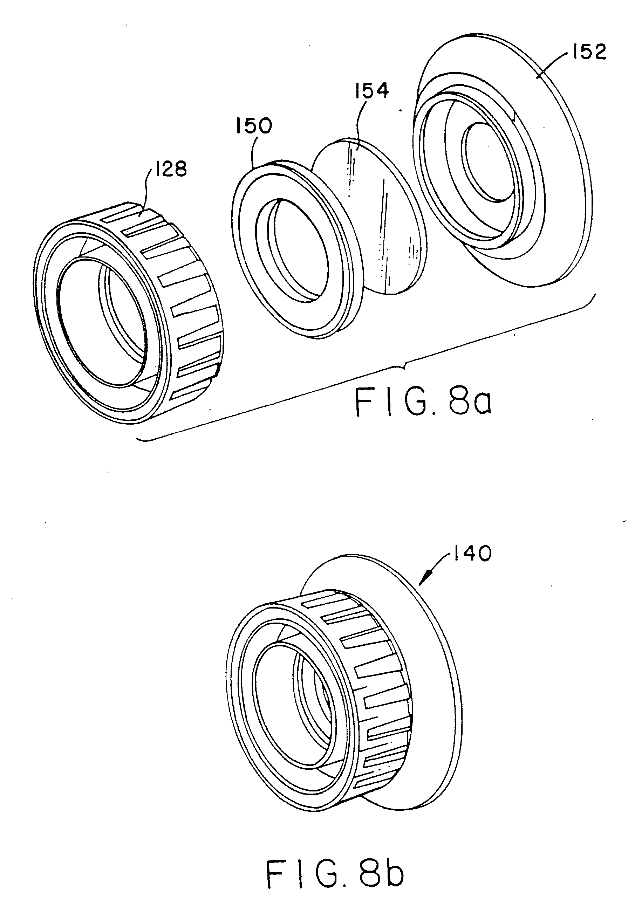

With reference now to FIGS. 7, 8a and 8b, the arrangement of the ocular and diopter assembly within the housing 18 of the present invention will now be described. Referring to FIG. 7, it can be seen that the diopter cell assembly is a snap-together assembly requiring no adhesives or mechanical fasteners. Light (designated by the arrows) entering the diopter cell assembly 68 passes through a first lens 105, where it is reflected 45° by a mirror 106 and redirected through an ocular lens 107. The first lens 105 and the mirror 106 are both connected to a common cell housing 108. The cell housing 108 has a face surface 109 through which an aperture 110 is formed. The aperture 110 has a stepped rim sized to accommodate the first lens 105. As a result, the first lens 105 can pass into, and become seated within, the aperture 110. A snap-on cover 112 connects to the cell housing 108 over the first lens 105. The cover 112 has an aperture 111 formed through it that is smaller than the diameter of the first lens 105. Consequently, when the cover 112 is joined to the cell housing 108, the first lens 105 becomes entrapped in a set position between the cover 112 and the cell housing 108. The aperture 111 in the cover 112 is positioned to enable light to pass into the first lens 105 and into the cell housing 108. Pawl receptacles 113 are formed on the cell housing 108 at points proximate the face surface 109. The cover 112 has locking pawls 114 that extend into and engage the pawl receptacles 113 on the cell housing 108, thereby interconnecting each of the two components with a snap fit.

Within the cell housing 108 a 45° sloped surface 116 extends between two side walls 117, 118. An aperture 119 is disposed in the sloped surface 116 at a position that aligns with the aperture 110 in the face surface 109 of the cell housing 108. A mirror 106 lays across the sloped surface 116 covering the aperture 119 in the sloped surface 116. The mirror 106 is held in one set position over the sloped surface 116 by a back plate 120. Projecting arms 122 extend from the four comers of the backplate 120. These projecting arms 122 engage notches 124 formed in the side walls 117, 118 as the back plate 120 passes between sidewalls 117, 118. The position of the notches 124 and the size of the back plate 120 correspond so that the back plate 120 engages the notches 124 with a slight interference fit, thereby enabling the projecting arms 122 to snap fit into the notches 124 and retain the back plate 120 in one set position. The back plate 120 biases the mirror 106 against the sloped surface 116, thereby retaining the mirror 106 over the aperture 119 in the sloped surface 116.

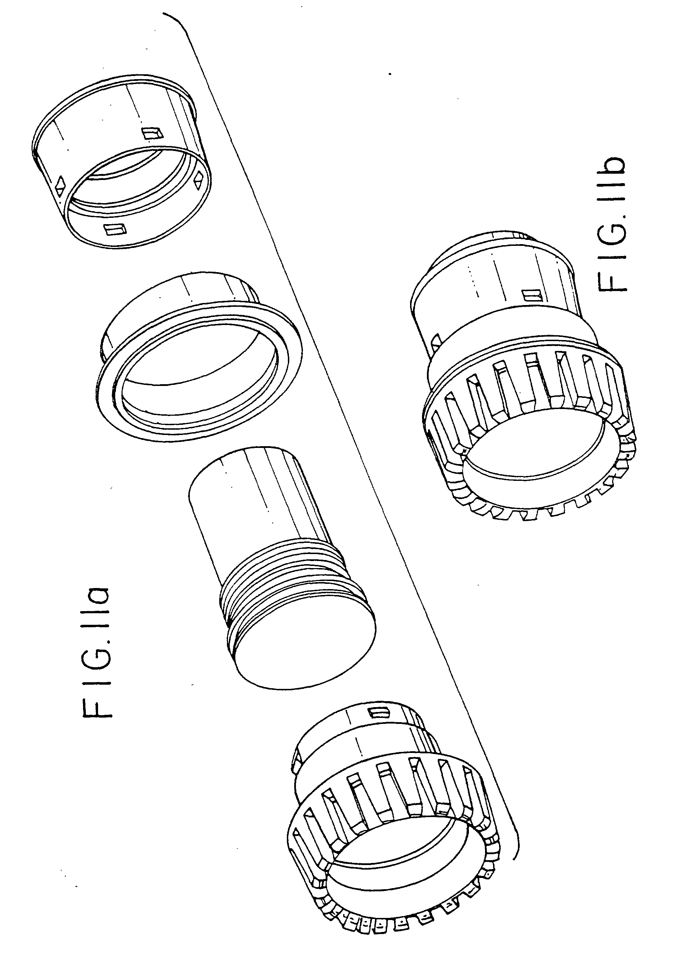

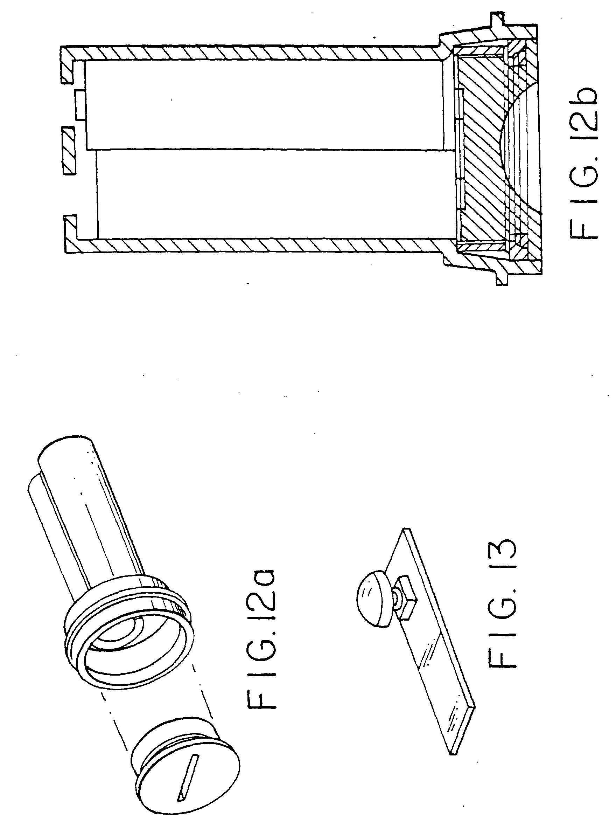

The mirror 106 directs light passing through the first lens 105 into the tubular region 125 of the cell housing 108. The tubular region 125 of the cell housing 108 is sized to be received within collar 126 and secured thereto by a suitable adhesive. Prior to insertion of tubular region 125 into collar 126, eye focus knob 128 (FIG. 8a) is positioned onto the collar. A strap retaining ring 138 is also positioned on collar 126. Ring 138 may be rotated 180° in either direction to accommodate a left or right handed user. A similar strap retaining ring is provided on the objective lens assembly (FIG. 11a). In order to provide controlled reciprocal movement of eye focus knob along collar 126, the respective components are threaded, with collar 126 having a threaded exterior portion 127 and focus knob 128 having a threaded bore extending therethrough. To prevent knob 128 from separating from collar 126 altogether, collar 126 is provided with a flange portion. With continued reference to FIG. 7, it can be seen that collar 126 is a tubular structure that is dimensioned to receive ocular lens 107.

As can be ascertained from Fig. 6, focus knob 128 can be moved to cause movement in the ocular lens 107. As knob 128 is moved back and forth in the directions of arrow 138, the sliding collar 126 and diopter assembly 68 is caused to move back and forth as an integral assembly within housing 18. This changes the position of the ocular lens 107 with respect to the other optical elements in the monoculars. Consequently, the movement of the ocular lens 107 acts as a focus adjustment, whereby the monocular device can be adjusted to suit either eye of the user. Turning now to FIGS. 8a and 8b, it will be seen that ocular assembly 140 comprises eye focus knob 128, and lens retaining ring 150. To provide comfort during use and shade the user's eyes from secondary light and during use of device 10, an elastomeric material in the form of an eyeshade 152 is seated within retaining ring 150. In order to increase the comfort of users who wear corrective eyeglasses, the eyeshade may be optionally provided with a prescription type lens (not shown) which accommodates the far distance or near distance prescription of the user.

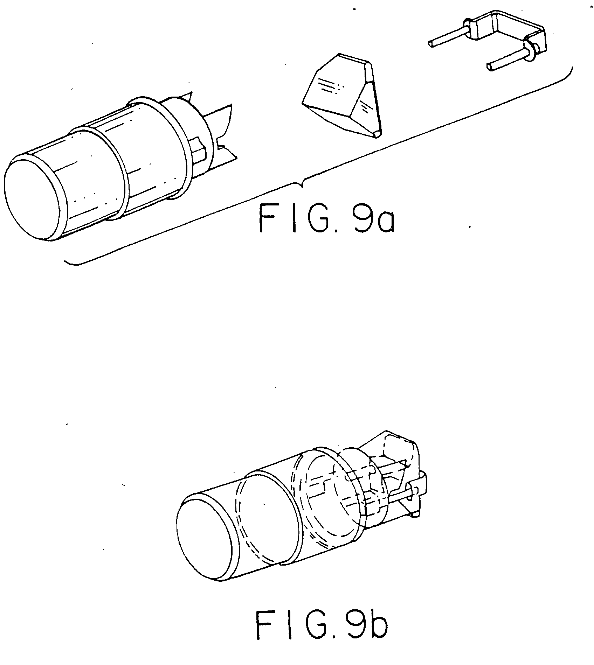

In the embodiment of FIG. 5, reflecting means 67 is coupled to the collimator lens assembly 66 by a U-shaped bracket assembly 80, as shown in FIGS. 9a and 9b. As seen in FIG. 9a, the peripheral edge of the distal end of lens assembly 66 is recessed to receive beam splitter 67. Moreover, bracket member 80 includes two pin members 81 and 82 which are dimensioned and arranged to be received within corresponding apertures (not shown) in two flange members (of which only one of them, 83) is shown. After beam splitter 67 has been inserted in the manner shown in FIG. 9b, bracket 80 is positioned so that pin members 81 and 82 are seated within the apertures. Consequently, beamsplitter 67 is held in a predetermined set orientation. As such, by simply clamping the beam splitter to collimator lens assembly 66 using bracket member 80, the collimator lens assembly 66 and beam splitter 67 are properly optically aligned with the other optical elements within housing 16. Collimator lens assemblies for night vision devices are known devices as is exemplified by U.S. Patent No. 5,157,553 to Phillips entitled COLLIMATOR FOR A BINOCULAR VIEWING SYSTEM and assigned to ITT Corporation. This patent is incorporated herein by reference. The operative of collimator lens assemblies are well known.

Each housing half section 20 and 22 has a semicircular aperture, 21 and 23 respectively (FIG. 3) which align to form a full window aperture when the housings sections or halves are secured together. The aperture aligns with the objective lens assembly 12 allowing infrared energy to pass into the housing 18 and impinge upon the objective lens assembly 12. A protective window is positioned within the aperture through which the infrared energy passes. The window is secured to the housing 18 with a fluid impermeable seal or adhesive thereby preventing the flow of water into the housing 18 through the aperture. In a similar arrangement, a viewing aperture aligns with the diopter cell assemblies to provide the ocular viewing path. A light sensor (FIG. 5) is disposed within the housing 18. The light sensor senses light through an aperture in the housing 18. The complete aperture 69 is formed when sections 22 and 20 are joined. The aperture 69 is aligned along an axis parallel to the longitudinal axis or optical axis of the objective lens assembly 12. As such, the light sensor operates detect the intensity of radiant energy that is impinging upon the objective lens assembly 62. This enables one to operate circuitry to block or deactivate the image intensifier tube 64 for excessive light levels which could damage the screen of the tube. See for example, U.S. Patent No. 5,146,077 entitled "GATED VOLTAGE APPARATUS FOR HIGH LIGHT RESOLUTION AND BRIGHT SOURCE PROTECTION OF IMAGE INTENSIFIER TUBE by Casert et al., issued on September 8, 1992. That patent describes protection circuits as well as describing GEN II and GEN III image intensifier. A protective window covers the aperture 69 in a fluid impermeable manner, thereby protecting the light sensor and the interior of the housing 18 from moisture and other contaminants.

An image intensifier tube 64 interconnects with the distal end 85 of the collimator lens assembly 66. Although the image intensifier tube 64 can be of any type, in the preferred embodiment, the image intensifier tube is similar to a Generation II (GEN II) tube of a type manufactured by ITT Corporation. In the shown embodiment, the image intensifier tube 64 has an elastomeric casing 86. The base structure 80 includes an enclosed tubular region 87 that has a diameter slightly smaller than the elastomeric casing 86 of the image intensifier tube 64. The elastomeric casing 86 of the image intensifier tube 64 passes into the enclosed tubular region 87 where it is retained by an interference fit. The lateral movement of the image intensifier tube 64 back and forth within the enclosed tubular region 87 is prevented by the interference fit and the abutment of the image intensifier tube 64 against the collimator lens assembly 66 and the sleeve 90 surrounding the objective lens assembly 62.

The operation of the electronic components contained within housing 18 is controlled by an on/off push button switch 28 that extends through an aperture defined by aligned semicircular recesses on the edges of upper section 18 and lower section 20 of housing 18.

Infrared or low intensity visible light is directed through the objective lens assembly 62 onto the image intensifier tube 64. The image intensifier tube 64 produces a visible image which is then directed to the collimator lens assembly 66. The brightness of the image produced by the image intensifier tube 64 may be controlled by manipulation of brightness control buttons (not shown). By depressing one of the brightness buttons, which may be of conventional construction, the gain of the image intensifier tube 64 can be increased or decreased, thereby increasing or decreasing the brightness of the image produced. Brightness controls for image intensifiers are well known. Since the image intensifier tube 64 is highly sensitive to light, a light sensor 67 is also made part of the night vision binoculars assembly. The light sensor 67 is coupled to a control circuit on the circuit board 38 that compares the detected light level to a threshold level and automatically turns off the image intensifier tube 64 should the threshold light level be surpassed.

The image produced by image intensifier tube 64 is directed through the collimator lens assembly 66 that reimages the image at a generally infinite conjugate. The conjugated image is then reflected by prism and directed toward the diopter cell assembly 68. The reflected image passes through the diopter cell assemblies where it is viewed and focused to the requirements of the user.

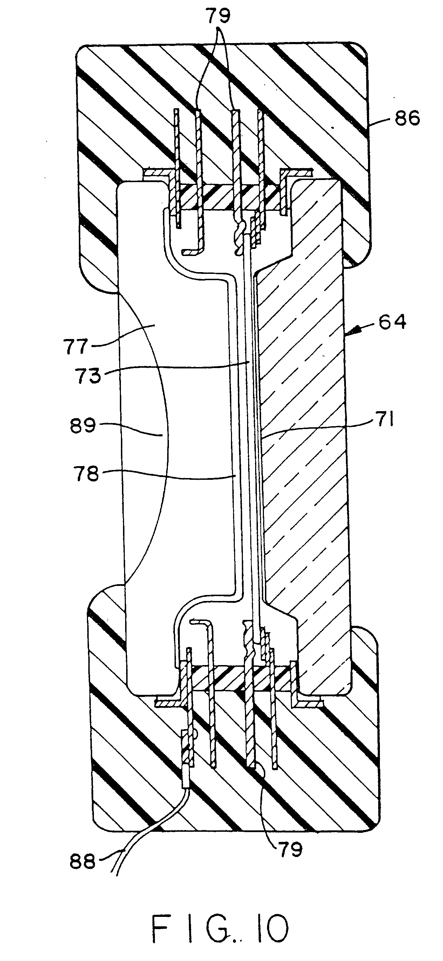

Referring to Fig. 10, a cross section of one preferred embodiment of the image intensifier tube 64 and its elastomeric casing 86 are shown. Although the image intensifier tube 64 can be of any known design, it is preferably a GEN II image intensifier tube. The operation of the GEN II image intensifier tube is known in the art. In the shown embodiment, the image intensifier tube 64 is a type of GEN II tube that has been modified to be produced at a much lower cost than typical GEN II tubes for military applications. The image intensifier tube 64 has a photocathode 71, microchannel plate 73, and a optical window 77 coated with a phosphor screen 78. To operate the image intensifier tube 64 various known electrical biases are applied to the photocathode 71, microchannel plate 73 and phosphor screen 78 to promote the flow of electrons from the photocathode 71 to the phosphor screen 78. In the prior art, electrical potentials were supplied to these components utilizing connector pins that extended into the evacuated housing of the image intensifier tube. Typically, the connector pins were disposed as far away form one another as possible to prevent any arcing from occurring between the various connector pins. In the shown embodiment, electrical bias is supplied to the photocathode 71, microchannel plate 73, and phosphor screen 78 via conductive annular flanges 79 that radially extend from the image intensifier tube 64. Wires 88 are then joined to the annular flanges 79 at the most convenient point and need not be directed to a single connector pin.

The elastomeric casing 86 that surrounds the image intensifier tube 64 is molded around the image intensifier tube 64. As such, the elastomeric material of the casing 86 fills the spaces between the various annular flanges 79. The elastomeric casing 86 therefore acts to encapsulate each of the annular flanges 79 and electrically isolates the annular flanges 79 from one another. The elastomeric casing 86 further acts to encapsulate the interconnection point between the various annular flanges 79 and wires 88, thereby deterring the wires 88 from detaching from the annular flange 79. The glass input and output plates as 78 and 77 are the same exact configuration with the exception of the domed portion 89. The annular connecting rings and the plate shape enable a inexpensive tube to be provided.

## Claims

1. A monocular night vision apparatus (10), comprising:
an objective lens subassembly (12) containing at least one first lens therein;
an image intensifier tube (64) for producing an intensified visible image from energy directed to said image intensifier tube through said objective lens subassembly;
a collimator subassembly (66) containing at least one second lens therein, said collimator subassembly (66) collimating the intensified image emanating from said image intensifier tube to produce a collimated image;
an eyepiece subassembly (14) containing at least one third lens therein for viewing said collimated image; and
a housing (18) having a first and second opposed interior surfaces, each of said surfaces including a plurality of aligned partitions (25, 27) extending therefrom for engaging and supporting said objective lens subassembly, said image intensifier tube, and said collimator subassembly in a predetermined optical relationship relative to each other

2. The apparatus according to Claim 1, wherein a plurality of said partitions (25, 27) from both said first and second opposed interior surface engage and support said objective lens subassembly, said image intensifier tube, and said collimator subassembly individually.

3. The apparatus according to Claim 1, wherein said objective lens subassembly, said image intensifier tube, and said collimator subassembly each have an optical axis and said plurality of partitions (25, 27) engage and support said objective lens subassembly, said image intensifier tube, and said collimator subassembly in said housing whereby the optical axis of each aligns.

4. The apparatus according to Claim 1, further including a battery subhousing (70) and a voltage regulator subassembly (74), wherein said battery subhousing and said voltage subassembly are supported in a predetermined position and orientation within said housing by said plurality of partitions (25, 27).

5. The apparatus according to Claim 1, wherein said plurality of partitions is the primary means provided for retaining said objective lens subassembly, said image intensifier tube and said collimator subassembly in said predetermined optical relationship within said housing.

6. The apparatus according to claim 1, wherein said means for directing and viewing said collimated image includes an eyepiece subassembly for viewing said collimated image and a diopter cell assembly for directing said collimated image to said eyepiece subassembly.

7. The apparatus according to Claim 1, wherein said objective lens subassembly, said image intensifier tube and said collimator subassembly are disposed on a first linear optical path and said eyepiece subassembly is disposed on a different second optical path; and apparatus further including a means (67) contained within said housing for directing said collimated image from said first linear optical path to said second optical path.

8. A monocular night vision apparatus (10) comprising:
an objective lens subassembly (12) having a first subhousing containing at least one first lens therein;
an image intensifier tube (64) for producing an intensified visible image from energy directed to said image intensifier tube through said objective lens subassembly;
an eyepiece subassembly (14) for viewing said visible image;
a collimator and diopter cell subassembly (66, 68) having a second subhousing containing at least one second lens therein, wherein said collimator and diopter cell subassembly (66, 68) collimates said visible image into said eyepiece subassembly; and
a housing (18) having opposed interior surfaces, wherein said interior surfaces include a plurality of partitions (25, 27) extending therefrom for engaging and supporting said objective lens subassembly, said image intensifier tube, said collimator and diopter cell subassembly and said eyepiece subassembly in a predetermined optical relationship relative to each other
